# EUROPÄISCHE PATENTSCHRIFT

(11) **EP 1 561 026 B1**
(45) Veröffentlichungstag und Bekanntmachung des Hinweises auf die Patenterteilung: **10.04.2013**
(21) Anmeldenummer: 03755544.8
(22) Anmeldetag: 18.07.2003
(51) Int. Cl.: F02M 59/34, F02M 59/46, F02M 59/36, F16K 31/06, F02M 63/00

(54) **KRAFTSTOFFZUMESSEINHEIT FÜR KRAFTSTOFFEINSPRITZANLAGEN VON BRENNKRAFTMASCHINEN**
FUEL METERING UNIT FOR THE FUEL INJECTION SYSTEM OF A COMBUSTION ENGINE
UNITE DE DOSAGE DE CARBURANT POUR SYSTEMES D'INJECTION DE CARBURANT DE MOTEURS A COMBUSTION

(30) Priorität: 02.11.2002 DE 10251014
(43) Veröffentlichungstag der Anmeldung: 10.08.2005
(73) Patentinhaber: ROBERT BOSCH GMBH, 70442 Stuttgart (DE)
(72) Erfinder: KOEHLER, Achim, 71254 Ditzingen (DE); AMBROCK, Sascha, 70839 Gerlingen (DE)
(86) Internationale Anmeldenummer: PCT/DE2003/002420
(87) Internationale Veröffentlichungsnummer: WO 2004/042225

(56) Entgegenhaltungen:
- EP-A- 1 321 663
- DE-A- 3 943 183
- DE-A- 19 510 646
- DE-A- 19 853 103

## Beschreibung

### Stand der Technik

Die Erfindung betrifft eine Kraftstoffzumesseinheit für eine Kraftstoffeinspritzanlage für Brennkraftmaschinen mit einem motordrehzahlabhängig angetriebenen Hochdruckpumpe, wobei die Kraftstoffzumesseinheit ein von einem Elektromagnet betätigtes Regelventil mit einem Ventilkolben aufweist, wobei der Ventilkolben in einem Ventilgehäuse geführt ist, wobei der Ventilkolben hülsenförmig ausgebildet ist und in seinem Innenraum eine ihn in Anlage an den Ankerbolzen haltende Druckfeder aufnimmt, wobei die Druckfeder sich rückseitig an einem in der Ventilbohrung des Ventilgehäuses angeordneten Federteller abstützt, wobei in der Wandung des Ventilgehäuses wenigstens eine vorzugsweise mehrere radiale Steueröffnungen angeordnet sind, die so geformt und/oder angeordnet sind, dass die durch die Kraftstoffzumesseinheit strömende Kraftstoffmenge in Abhängigkeit vom Ventilkolbenhub einstellbar ist.

Bei dieser aus der DE 198 53 103 A1 bekannten Kraftstoffzumesseinheit ist der Federteller in axialer Richtung hinter dem Ventilkolben angeordnet. Bei dem in Figur 8 der DE 198 53 103 A1 beschriebenen Ausführungsbeispiel kann an dem Ventilteller ein Axialdichtsitz vorgesehen sein. In der Schließstellung des Regelventils kommt der Ventilkolben in Anlage an den axialen Dichtsitz und soll damit das Regelventil dicht absperren, so dass kein Kraftstoff durch die Kraftstoffzumesseinheit zur Kraftstoffhochdruckpumpe gelangt.

### Vorteile der Erfindung

Bei der erfindungsgemäßen Kraftstoffzumesseinheit für eine Kraftstoffeinspritzanlage für Brennkraftmaschinen nach dem Oberbegriff des anhängigen Anspruchs 1 ist vorgesehen, dass im Innenraum des Ventilkolbens eine Absperrhülse angeordnet ist, und dass der Ventilkolben und die Absperrhülse ein Absperrventil bilden.

Dadurch, dass das Absperrventil in das Innere des Ventilkolbens integriert ist, wird die Baulänge der Zumesseinheit reduziert und außerdem der Durchmesser des axialen Dichtsitzes im Vergleich zu der aus dem Stand der Technik bekannten Ringspaltdichtung deutlich verringert. Infolgedessen sperrt die erfindungsgemäße Kraftstoffzumesseinheit in der Schließstellung des Regelventils die Kraftstoffzufuhr zu der Hochdruckpumpe sehr viel besser ab.

Infolgedessen kann auch auf zusätzliche Maßnahmen zur Vermeidung eines unerwünschten Druckaufbaus im Schiebebetrieb der Brennkraftmaschine, wie bspw. eine Nullförderdrossel oder ein zweites Druckregelventil auf der Druckseite der Hochdruckpumpe verzichtet werden. Dies trägt zur Kosteneinsparung in erheblichem Umfang bei.

Es hat sich als besonders vorteilhaft herausgestellt, wenn das Absperrventil als Kugelventil ausgebildet ist, und/oder zwischen der Absperrhülse und dem Ventilkolben eine Kugel angeordnet ist, wobei die Absperrhülse einen Dichtsitz aufweist.

Durch die Verwendung eines Kugelventils wird die Herstellung vereinfacht, da die Kugel Fluchtungs- und Winkelfehler, die bei der Herstellung nahezu unvermeidlich sind, ausgleichen kann.

Um zu gewährleisten, dass die Kugel sich stets an der ihr zugedachten Stelle befindet, weist in weiterer Ausgestaltung der Erfindung der Ventilkolben einen Kugelhalter auf, welcher die Kugel in einer relativ zum Ventilkolben definierten Lage hält.

Zur weiteren Vereinfachung der Herstellung und Montage der erfindungsgemäßen Kraftstoffzumesseinheit ist weiter vorgesehen, dass der Federteller in die Absperrhülse integriert ist. Dies kann beispielsweise dadurch geschehen, dass in die Absperrhülse eine Ringnut eingedreht wird, welche der Fixierung der Druckfeder dient.

Dadurch wird die Zahl der Bauteile verringert und die Baulänge der erfindungsgemäßen Kraftstoffzumesseinheit weiter reduziert. Außerdem ist es möglich, das Regelventil durch eine axiale Verschiebung und anschließende Fixierung der Absperrhülse in der Ventilbohrung einzustellen. Wenn der Federteller und die Absperrhülse zwei verschiedene Bauteile sind, muss sowohl die axiale Position des Federtellers als auch der Absperrhülse bei jedem Regelventil vor dessen Inbetriebnahme eingestellt werden, was einen erhöhten Kosten- und Zeitaufwand bedeutet.

Weitere Vorteile und vorteilhafte Ausgestaltungen der Erfindung sind der nachfolgenden Zeichnung, deren Beschreibung und den Patentansprüchen entnehmbar.

### Zeichnung

Es zeigt:
Fig. 1 eine Ausführungsform einer Kraftstoffzumesseinheit, im vertikalen Längsschnitt und
Fig. 2 eine vergrößerte Darstellung der Einzelheit "A" aus Fig. 1.

### Beschreibung der Ausführungsbeispiele

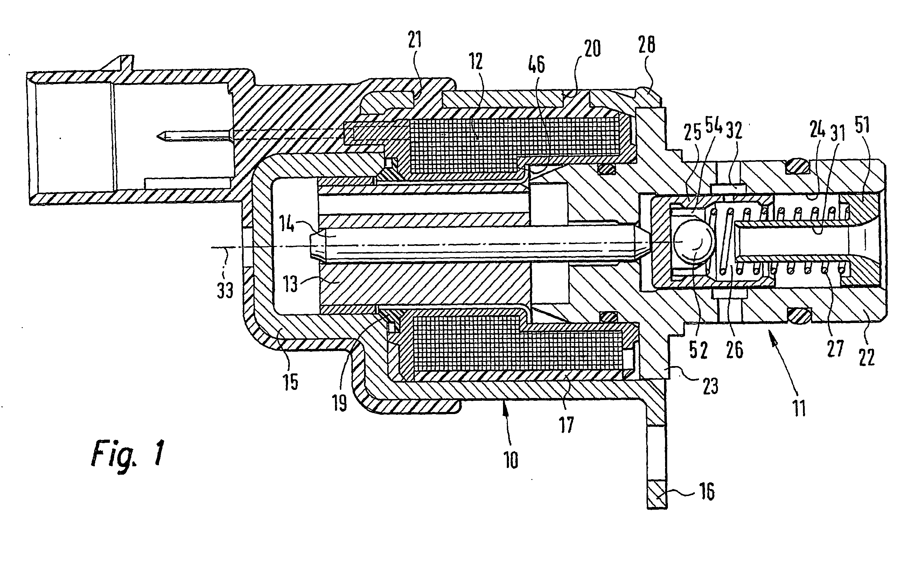

Die Kraftstoffzumesseinheit nach Fig. 1 basiert auf einem Elektromagneten 10 mit integriertem Regelventil 11. Im einzelnen besteht der Elektromagnet 10 aus einer Magnetspule 12, einem Anker 13 mit Ankerbolzen 14 und einem Magnettopf 15, der die Magnetspule 12 und den Anker 13 teilweise umschliesst.

Die gesamte Baueinheit Elektromagnet 10 mit integriertem Regelventil 11 ist in einer (nicht dargestellten) Kraftstoff-Hochdruckpumpe angeordnet. Der Magnettopf 15 dient hierbei gleichzeitig als Abdichtelement, als magnetischer Rückschluss und als Befestigungselement (siehe Bezugszeichen 16) des Elektromagneten 10 in der Hochdruckpumpe.

Die Magnetspule 12 wird, nachdem sie in den Magnettopf 15 eingesetzt ist, vollständig umspritzt. Durch die mit 17 bezeichnete Umspritzung ist ein optimaler Wärmeübergang von der Spule 12 an den Magnettopf 15 gewährleistet. Einer Überhitzung in kritischen Betriebszuständen kann hierdurch entgegengewirkt werden. Weiterhin führt die Umspritzung 17 zu einer guten Schwing- und Schüttelfestigkeit, wodurch eine Befestigung der Kraftstoffzumesseinheit 10, 11 an hochbelasteten Stellen, z. B. der Kraftstoffhochdruckpumpe, in bezug auf Schwingungen, Temperatur- und Umweltbelastungen ermöglicht wird.

Des weiteren wird durch die Umspritzung 17 der Magnetspule 12 im Zusammenwirken mit zwei Abdichtstellen 18, 19 gewährleistet, dass die Kontaktstellen der Spule 12 zu den Steckerfahnen (nicht gezeigt) "trocken" sind. Magnetspulenwicklung und Kontaktstellen sind somit vor Angriffen korrosiver Medien optimal geschützt.

Zur Kontrolle, dass die Umspritzung 17 die Magnetspule 12 vollständig umschließt, sind am Umfang des Magnettopfes 15 "Überlaufbohrungen" 20, 21 vorgesehen.

Das Regelventil 11 besitzt ein Ventilgehäuse 22, welches in eine flanschartige Verbreiterung 23 übergeht, die zugleich den stirnseitigen Abschluss des Magnettopfes 15 bildet. In dem Ventilgehäuse 22 ist eine Ventilbohrung 24 ausgebildet, die koaxial zu dem Ankerbolzen 14 des Elektromagneten 10 angeordnet sind. Die Ventilbohrung 24 nimmt einen verschieblichen hülsenförmigen Ventilkolben 25 auf, in dessen Innenraum 26 eine Druckfeder 27, eine Absperrhülse 51 und eine Kugel 52 angeordnet sind.

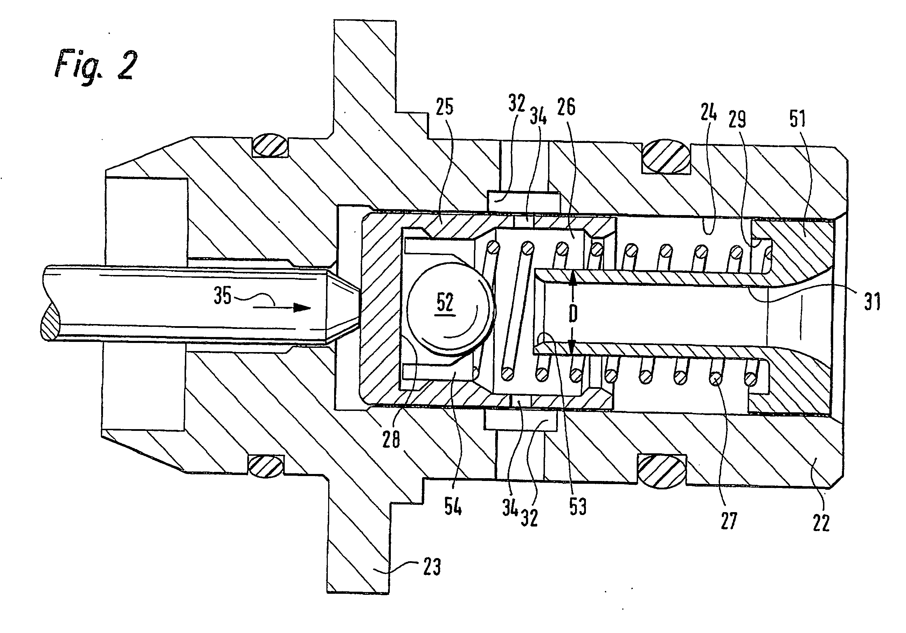

Figur 2 zeigt eine detaillierte Darstellung des Innenraums 26 anhand derer das Zusammenwirken der genannten Bauteile des Druckregelventils 11 deutlich wird.

Die Druckfeder 27 stützt sich vorderseitig an einem Kugelhalter 54 und rückseitig in einer Ringnut 29 der Absperrhülse 51 ab. Die Absperrhülse 51 ist in der Ventilbohrung 24 beispielsweise durch Einpressen befestigt.

Der Kugelhalter 54 wiederum stützt sich über die Kugel 52 auf einem Boden 28 des Ventilkolbens 25 ab und hält damit den Ventilkolben 25 in Anlage an dem vorderen Ende des Ankerbolzens 14.

Eine Öffnung 31 der Absperrhülse 51 verbindet in der in Fig. 1 dargestellten Stellung des Ventilkolbens 25 den Innenraum 26 des Ventilkolbens 25 mit einer (nicht dargestellten) Vorförderpumpe des Kraftstoffeinspritzsystems.

In dem Ventilgehäuse 22 sind des weiteren mehrere radial gerichtete Steueröffnungen angeordnet, von denen zwei aus Fig. 1 ersichtlich und mit 32 beziffert sind. Die Steueröffnungen 32 steht mit dem Niederdruckbereich der (nicht gezeigten) Hochdruckpumpe in hydraulischer Wirkverbindung. Im Ventilkolben 25 sind mehrere radiale Öffnungen 34 vorhanden, die mit den Steueröffnungen 32 im Ventilgehäuse 22 zusammenwirken.

Fig. 1 zeigt das Regelventil 11 in geöffnetem Zustand, in dem die Steueröffnungen 32 und die Öffnungen 34 im Ventilkolben 25 eine hydraulische Verbindung haben. In dieser Stellung ist der Elektromagnet 10 nicht bestromt und die Druckfeder 27 bringt den Ventilkolben 25 in die in Fig. 1 dargestellte Position.

In der in Fig. 1 dargestellten Öffnungsstellung des Regelventils 11 strömt der dem Regelventil 11 bei 31 zugeführte Kraftstoff durch die Absperrhülse 51 hindurch, kehrt seine Strömungsrichtung an deren Ende um und strömt durch die Öffnungen 34 im Ventilkolben 25 und die Steueröffnungen 32 im Ventilgehäuse 22 in Richtung der nicht dargestellten Hochdruckpumpe.

Wie bereits erwähnt, hat es sich in der Praxis als zweckmäßig erwiesen, nicht nur eine, sondern mehrere, am Umfang des Ventilgehäuses 22 verteilte, radiale Steueröffnungen 32 vorzusehen. In der DE 198 53 103 A1 ist die Gestaltung der Steueröffnungen 32 im Detail beschrieben. Auf diese Beschreibung wird hiermit Bezug genommen.

Im Schubbetrieb des Fahrzeugs muss das Regelventil 11 dicht geschlossen werden, um Leckagen desselben in die Hochdruckpumpe während des Schiebebetriebs zu verhindern. Solche Leckagen des Regelventils 11 führen zu einer unerwünschten Kraftstoffförderung der Hochdruckpumpe und somit zu einer Drucksteigerung im Common-Rail des Kraftstoffeinspritzsystems. In Folge der Drucksteigerung im Common-Rail kann es zu einer unerwünschten Geräuschentwicklung während des Schiebebetriebs kommen ("hartes Verbrennungsgeräusch").

Um die Dichtheit des Regelventils 11 zu gewährleisten, ist in den Ventilkolben 25 eine Absperreinrichtung, bestehend im wesentlichen aus der Absperrhülse 51 und der Kugel 52 integriert. Die Funktion dieser Absperreinrichtung wird nachfolgend anhand der Figur 2, die einen vergrößerten Ausschnitt aus Fig. 1 darstellt, erläutert.

Wie aus Figur 2 ersichtlich, ist an der Absperrhülse 51 ein Dichtsitz 53 ausgebildet auf dem die Kugel 52 in der Schließstellung (nicht dargestellt) des Regelventils 11 aufliegt. Die Kugel 52 wird vom Ankerbolzen 14 über den Boden 28 des Ventilkolbens 27 in den Dichtsitz 53 gepresst. Damit ist die hydraulische Verbindung zwischen der Öffnung 31 zu der Steueröffnung 32 unterbrochen. Die Stellbewegung des Ankerbolzens 14 gegen die Druckfeder 27 wird durch eine der gewünschten Stellkraft entsprechende Bestromung des Elektromagneten 10 ermöglicht. Diese Stellbewegung ist in Fig. 2 durch einen Pfeil 35 angedeutet Wenn die Kugel 52 auf dem Dichtsitz 53 der Absperrhülse 51 aufliegt (nicht dargestellt), ist das Regelventil 11 geschlossen.

Durch eine geeignete Ansteuerung des Elektromagneten 10 können beliebige Zwischenstellungen des Ventilkolbens 25 zwischen der dargestellten Position und der nicht dargestellten Schließstellung eingestellt werden. In diesen Zwischenstellungen (nicht dargestellte) regelt das Regelventil 11 die von der Hochdruckpumpe (nicht dargestellt) angesaugte Kraftstoffmenge und damit die Förderleistung der Hochdruckpumpe.

Die Vorteile eines Kugelventils sind hinlänglich aus dem Stand der Technik bekannt und bedürfen deshalb keiner ausführlichen Erläuterung. Wichtig im Zusammenhang mit der Erfindung ist jedoch auch, dass der Durchmesser D des Dichtsitzes 53 relativ klein ist, so dass sich schon bei einer verhältnismäßig geringen Anpresskraft des Ankerbolzens 14 eine hohe Flächenpressung zwischen Kugel 52 und Dichtsitz 53 der Absperrhülse 51 ergibt. Dies erhöht die Dichtheit des erfindungsgemäßen Absperrventils.

Wenn, ausgehend von der nicht dargestellten Schließstellung des Regelventils 11, die Bestromung des Ankerbolzens 14 reduziert wird, bewegt die Druckfeder 27 den Ventilkolben 25 in Richtung des Ankerbolzens 14, so dass die Kugel 52 vom Dichtsitz 53 abhebt. Dabei wird die Kugel 52 durch den Kugelhalter 54 vom Dichtsitz 53 abgehoben. Somit hat die Kugel 52 stets eine definierte Lage relativ zum Ventilkolben 25 und kann sich nicht zwischen den Boden 28 des Ventilkolbens 25 und dem Dichtsitz 53 hin und her bewegen. Diese Hin- und Herbewegung wäre nachteilig für die Regelgüte des Regelventils 11.

Die Richtung in der das Regelventil 11 durchströmt wird kann auch umgekehrt werden. Hierbei wäre dann die Öffnung 31 mit dem Niederdruckbereich der Hochdruckpumpe hydraulisch verbunden, während die Steueröffnung 32 mit der Druckseite der Vorförderpumpe verbunden wäre und somit den Zulauf in die Zumesseinheit bilden würde.

Vor der ersten Inbetriebnahme der Kraftstoffzumesseinheit bedarf es einer Einstellung des Regelventils 11. Diese erfolgt durch entsprechende axiale Verschiebung der Absperrhülse 51 in der Ventilbohrung 24 und anschließende Fixierung derselben. Im einzelnen wird der Einstellvorgang wie folgt vorgenommen.

Zunächst wird der Elektromagnet 10 mit einem definierten Strom beaufschlagt.
Anschließend wird die Absperrhülse 51 so weit in die Ventilbohrung 24 eingeschoben, dass durch die Steueröffnungen 32 ein definierter Volumenstrom fließt. In dieser Stellung wird die Absperrhülse 51 in der Ventilbohrung 24 fixiert, z. B. indem die Absperrhülse 51 als Einpressteil ausgebildet ist oder das Ventilgehäuse 22 von außen plastisch verformt wird. Es ist vorteilhaft, wenn der Ventil-Einstellpunkt in den Bereich minimaler Kraftstoff-Durchflussmengen gelegt wird, da hierdurch der toleranzempfindliche Leerlaufbereich exakt eingestellt werden kann.

Gleichzeitig mit der Einstellung des Regelventils 11 ist auch die axiale Position des Dichtsitzes 53 relativ zum Boden 28 des Ventilkolbens 25 und der Kugel 52 festgelegt. Dadurch ist gewährleistet, dass in der Schließstellung des Ventilkolbens 25 die Kugel 52 die Absperrhülse 51 verschließt und somit kein Kraftstoff durch die Steueröffnung 32 gelangt. Durch die Integration der Ringnut 29 in die Absperrhülse kann die Zahl der notwenigen Einstellvorgänge auf 1 reduziert werden, was die Herstellungskosten der Zumesseinheit deutlich reduziert.

## Patentansprüche

1. Kraftstoffzumesseinheit für eine Kraftstoffeinspritzanlage für Brennkraftmaschinen mit einer motordrehzahlabhängig angetriebenen Hochdruckpumpe, wobei die Kraftstoffzumesseinheit ein von einem Elektromagnet (10) betätigtes Regelventil (11) mit einem Ventilkolben (25) aufweist, wobei der Ventilkolben (25) in einem Ventilgehäuse (22) geführt ist, wobei der Ventilkolben (25) hülsenförmig ausgebildet ist und in seinem Innenraum (26) eine ihn in Anlage an dem Ankerbolzen (14) haltende Druckfeder (27) aufnimmt und wobei die Druckfeder (27) sich rückseitig an einem in der Ventilbohrung (24) des Ventilgehäuses (22) angeordneten Federteller abstützt, wobei in der Wandung des Ventilgehäuses (22) mindestens eine, vorzugsweise mehrere radiale Steueröffnungen (32) angeordnet sind, die so geformt und/oder angeordnet sind, dass die durch die Kraftstoffzumesseinheit strömende Kraftstoffmenge in Abhängigkeit vom Hub des Ventilkolbens (25) einstellbar ist, **dadurch gekennzeichnet, dass** im Innenraum (26) des Ventilkolbens (25) eine Absperrhülse (51) angeordnet ist, und dass der Ventilkolben (25) und die Absperrhülse (51) eine Absperreinrichtung bilden.

2. Kraftstoffzumesseinheit nach Anspruch 1, **dadurch gekennzeichnet**, und dass die Absperreinrichtung als Kugelventil (52, 53) ausgebildet ist.

3. Kraftstoffzumesseinheit nach Anspruch 2, **dadurch gekennzeichnet**, und dass zwischen der Absperrhülse (51) und dem Ventilkolben (25) eine Kugel (52) angeordnet ist, und dass die Absperrhülse (51) einen Dichtsitz (53) aufweist.

4. Kraftstoffzumesseinheit nach einem der Ansprüche 2 oder 3, **dadurch gekennzeichnet, dass** der Ventilkolben (25) einen Kugelhalter (54) aufweist, und das der Kugelhalter (54) die Kugel (52) in einer relativ zum Ventilkolben (25) definierten Lage hält.

5. Kraftstoffzumesseinheit nach einem der vorhergehenden Ansprüche, **dadurch gekennzeichnet, dass** sich die Druckfedern (27) einenends an der Absperrhülse (51) abstützt.

6. Kraftstoffzumesseinheit nach einem der vorhergehenden Ansprüche, **dadurch gekennzeichnet, dass** in der Absperrhülse (51) eine Ringnut (29) oder ein Führungsbund zur Aufnahme der Druckfeder (27) vorgesehen ist.

7. Kraftstoffzumesseinheit nach einem der vorhergehenden Ansprüche, **dadurch gekennzeichnet, dass** das Regelventil (11) durch entsprechende axiale Verschiebung und anschließende Fixierung der Absperrhülse (51) in der Ventilbohrung (24) einstellbar ist.

## Claims

1. Fuel metering unit for a fuel injection system for internal combustion engines, having a high-pressure pump which is driven in a manner dependent on the engine rotational speed, wherein the fuel metering unit has a regulating valve (11) which is actuated by an electromagnet (10) and which has a valve piston (25), wherein the valve piston (25) is guided in a valve housing (22), wherein the valve piston (25) is of sleeve-shaped form and receives, in the interior space (26) thereof, a pressure spring (27) which holds said valve piston in contact with the armature pin (14), and wherein the pressure spring (27) is supported at the rear side on a spring plate which is arranged in the valve bore (24) of the valve housing (22), wherein in the wall of the valve housing (22) there are arranged at least one, preferably a plurality of radial control openings (32) which are formed and/or arranged such that the fuel amount flowing through the fuel metering unit can be adjusted as a function of the stroke of the valve piston (25), **characterized in that** a shut-off sleeve (51) is arranged in the interior space (26) of the valve piston (25), and **in that** the valve piston (25) and the shut-off sleeve (51) form a shut-off device.

2. Fuel metering unit according to Claim 1, **characterized in that** the shut-off device is formed as a ball valve (52, 53).

3. Fuel metering unit according to Claim 2, **characterized in that** a ball (52) is arranged between the shut-off sleeve (51) and the valve piston (25), and **in that** the shut-off sleeve (51) has a sealing seat (53).

4. Fuel metering unit according to either of Claims 2 and 3, **characterized in that** the valve piston (25) has a ball holder (54), and **in that** the ball holder (54) holds the ball (52) in a defined position relative to the valve piston (25).

5. Fuel metering unit according to one of the preceding claims, **characterized in that** the pressure spring (27) is supported at one end on the shut-off sleeve (51).

6. Fuel metering unit according to one of the preceding claims, **characterized in that** an annular groove (29) or a guide collar for receiving the pressure spring (27) is provided in the shut-off sleeve (51).

7. Fuel metering unit according to one of the preceding claims, **characterized in that** the regulating valve (11) can be adjusted by means of corresponding axial displacement and subsequent fixing of the shut-off sleeve (51) in the valve bore (24).

## Revendications

1. Unité de dosage de carburant pour une installation d'injection de carburant de moteurs à combustion interne comprenant une pompe haute pression entraînée en fonction du régime du moteur, l'unité de dosage de carburant présentant une soupape de régulation (11) actionnée par un électroaimant (10), avec un piston de soupape (25), le piston de soupape (25) étant guidé dans un boîtier de soupape (22), le piston de soupape (25) étant réalisé en forme de douille et recevant dans son espace interne (26) un ressort de pression (27) le retenant en appui contre le goujon d'induit (14) et le ressort de pression (27) s'appuyant du côté arrière contre une coupelle de ressort disposée dans l'alésage de soupape (24) du boîtier de soupape (22), au moins une, de préférence plusieurs, ouvertures de commande radiales (32) étant disposées dans la paroi du boîtier de soupape (22), lesquelles sont formées et/ou disposées de telle sorte que la quantité de carburant s'écoulant à travers l'unité de dosage de carburant puisse être ajustée en fonction de la course du piston de soupape (25), **caractérisée en ce que** dans l'espace interne (26) du piston de soupape (25) est disposée une douille d'arrêt (51), et **en ce que** le piston de soupape (25) et la douille d'arrêt (51) forment un dispositif d'arrêt.

2. Unité de dosage de carburant selon la revendication 1, **caractérisée en ce que** le dispositif d'arrêt est réalisé sous forme de soupape sphérique (52, 53).

3. Unité de dosage de carburant selon la revendication 2, **caractérisée en ce qu'**entre la douille d'arrêt (51) et le piston de soupape (25) est disposée une bille (52), et **en ce que** la douille d'arrêt (51) présente un siège d'étanchéité (53).

4. Unité de dosage de carburant selon l'une quelconque des revendications 2 ou 3, **caractérisée en ce que** le piston de soupape (25) présente un support de bille (54), et **en ce que** le support de bille (54) retient la bille (52) dans une position définie par rapport au piston de soupape (25).

5. Unité de dosage de carburant selon l'une quelconque des revendications précédentes, **caractérisée en ce que** le ressort de pression (27) s'appuie à une extrémité contre la douille d'arrêt (51).

6. Unité de dosage de carburant selon l'une quelconque des revendications précédentes, **caractérisée en ce que** dans la douille d'arrêt (51) est prévue une rainure annulaire (29) ou un épaulement de guidage pour recevoir le ressort de pression (27).

7. Unité de dosage de carburant selon l'une quelconque des revendications précédentes, **caractérisée en ce que** la soupape de régulation (11) peut être ajustée par un déplacement axial correspondant et une fixation subséquente de la douille d'arrêt (51) dans l'alésage de soupape (24).
